# EUROPÄISCHE PATENTSCHRIFT

(11) **EP 0 494 632 B1**
(45) Veröffentlichungstag und Bekanntmachung des Hinweises auf die Patenterteilung: **09.09.1998**
(21) Anmeldenummer: 92100135.0
(22) Anmeldetag: 07.01.1992
(51) Int. Cl.: G06F 15/80, G06K 9/36, G06K 9/66, G01S 7/02

(54) **Signalverarbeitungsanordnung zur Klassifizierung von Objekten aufgrund der Signale von Sensoren**
Signal-processing arrangement for classifying objects on the basis of signals from sensors
Dispositif de traitement de signal pour la classification d'objets sur la base de signaux de capteurs

(30) Priorität: 10.01.1991 DE 4100500
(43) Veröffentlichungstag der Anmeldung: 15.07.1992
(73) Patentinhaber: Bodenseewerk Gerätetechnik GmbH, 88662 Überlingen (DE)
(72) Erfinder: Krogmann, Uwe, W-7770 Überlingen (DE)
(74) Vertreter: Weisse, Jürgen, Dipl.-Phys. Patentanwalt

(56) Entgegenhaltungen:
- INTERNATIONAL JOINT CONFERENCE ON NEURAL NETWORKS Juni 1989, WASHINGTON Seiten I-39 - I-44 ROBERT H. BARAN 'A Collective Computation Approach to Automatic Target Recognition'
- IEEE INTERNATIONAL CONFERENCE ON SYSTEMS ENGINEERING August 1990, PITTSBURGH, PA Seiten 327 - 330 SAM P. CHAUDHURI ET AL 'Neural Networks for Data Fusion'
- SPIE PROCEEDINGS - NONLINEAR IMAGE PROCESSING Bd. 1247, Februar 1990, SANTA CLARA, CAL Seiten 250 - 273 R. RAGHAVAN ET AL 'Image recognition and learning in parallel networks'
- 16TH ANNUAL CONFERENCE OF IEEE INDUSTRIAL ELECTRONICS SOCIETY: VOL.1 "SIGNAL PROCESSING AND SYSTEM CONTROL FACTORY AUTOMATION" November 1990, PACIFIC GROVE, CAL Seiten 507 - 511 YAMAGUCHI ET AL 'A 3-D Shape Identification System using a Fiber Grating Vision Sensor'
- 16TH ANNUAL CONFERENCE OF IEEE INDUSTRIAL ELECTRONICS SOCIETY: VOL.1 "SIGNAL PROCESSING AND SYSTEM CONTROL FACTORY AUTOMATION" November 1990, PACIFIC GROVE, CAL Seiten 707 - 722 REN C. LUO ET AL 'A Tutorial on Multisensor Integration and Fusion'

## Beschreibung

Die Erfindung betrifft eine Signalverarbeitungsanordnung zur Klassifizierung von Objekten aufgrund der Signale einer Mehrzahl verschiedener Sensoren.

Es gilt, ein Objekt aufgrund der Signale verschiedener Sensoren zu identifizieren und zu klassifizieren. Jeder der Sensoren liefert Informationen über andere Eigenschaften des Objekts. Aus diesen Informationen soll festgestellt werden, zu welcher Klasse das Objekt gehört. Die Sensoren können bilderfassende Sensoren sein, die Informationen über die Form des Objekts liefern. Solche Sensoren können aber auch Informationen über die Verteilung einer Meßgröße, z.B. der Temperatur oder des Reflexionsvermögens, über die Oberfläche des Objekts liefern. Die Sensoren können in verschiedenen Wellenlängenbereichen arbeiten, beispielsweise mit Radar, mit Laserstrahlen oder mit Infrarotstrahlung.

Eine Anwendung solcher Identifizierungs und Klassifizierungstechniken sind Suchköpfe, die ganz bestimmte Ziele erfassen müssen. Dabei ist eine Identifizierung der Ziele insbesondere erforderlich, wenn Ziele außerhalb des Sichtbereichs angesteuert werden müssen, so daß eine Anfangsausrichtung des Suchkopfes auf ein bestimmtes Ziel nicht möglich ist.

### Zugrundeliegender Stand der Technik

Mit den üblichen Verfahren der Mustererkennung und Klassifizierung allein ist es schwierig, für die einzelnen Sensorsysteme die Identifikationsdeklarationen mit möglichst genauer Fehlerdarstellung (Vertrauensaussagen) zu erstellen, so daß auf einer höheren Signalverarbeitungsstufe diese Informationen bezüglich widersprüchlicher und unsicherer Inhalte der Information von einzelnen Sensoren möglichst gut kombiniert werden können. Es ergeben sich bei den bekannten Verfahren insbesondere lange Lösungszeiten zur Verarbeitung der mehrfachen Identifikationsdaten, unumgängliche Fehler und Unschärfen in den die Zielattribute beschreibenden Daten. Außerdem ist eine Fehlertoleranz erforderlich, die mit den bekannten Techniken nicht erreichbar ist.

Ein besonderes Problem ist dabei, daß die fortschrittliche Sensortechnik immer umfassendere Mengen roher und auch vorverarbeiteter Sensordaten liefert, die in Echtzeit verarbeitet werden müssen. Dies führt bei klassischen Signalverarbeitungstechniken zu immer höheren Anforderungen an den Durchsatz. Das erfordert große Rechner, die für viele Anwendungen nicht einsetzbar sind.

Es sind Rechner in Form neuronaler Netzwerke bekannt. Solche neuronalen Netzwerke bieten folgende Vorteile: Sie stellen sich schnell auf zufriedenstellende Lösungen ein. Sie zeigen ein selbstorganisiertes Lernen basierend auf dem Trainieren anhand von Beispielen. Die gelernten Regeln und Fakten stecken in den Gewichtsfaktoren der Zellverbindung (Langzeitspeicher). Dadurch entfällt bei neuronalen Netzen die bei konventionellen Lösungen notwendige, langwierige Kommunikation zwischen Speicher- und Prozessorelementen. Durch parallel-redundante Hardware-Realisierung ergibt sich eine hochfehlertolerante Arbeitsweise.

Die US-A-4 876 731 betrifft Mustererkennung, speziell das Ablesen von Beträgen auf Schecks. Das Muster wird als Pixelmatrix eingegeben. Die Signalverarbeitung erfolgt mittels eines neuronalen Netzwerkes. Die US-A-4 876 731 beschreibt auch die Verwendung eines Expertensystems in Verbindung mit der Objekterkennung. Das Expertensystem liefert dabei Wissen über beispielsweise die Gesetze der Physik oder die Objektumgebung. Bei der US-A-4 876 731 wird Wissen über die durch den Scheck zu bezahlenden Beträge zur Stützung der Identifikation des Musters benutzt.

Die WO-A-90 16 038 beschreibt ein zweischichtiges neuronales Netzwerk, welches die Position eines sich bewegenden Objekts, beispielsweise einer Rakete, mit einem vorhergesagten Zustand vergleicht.

Die DE-A-3 907 843 beschreibt ein Expertensystem; die DE-A-3 922 129 beschreibt den Aufbau eines neuronalen Rechners.

### Offenbarung der Erfindung

Der Erfindung liegt die Aufgabe zugrunde, eine optimale Struktur für die Signalverarbeitung zur Klassifizierung von Objekten aufgrund der Signale einer Mehrzahl von Sensoren zu schaffen.

Erfindungsgemäß wird diese Aufgabe durch die im Anspruch 1 angegebene Signalverarbeitungsanordnung gelöst.

Es werden dabei neuronale Netzwerte benutzt, welche die Probleme der klassischen Rechner mit Speicher und Prozessor vermeiden. Durch die überlagerung der Sensordaten auf niedriger Ebene ergeben sich bessere Leistungsdaten der Detektion, Identifikation und Klassifizierung bezüglich der Vertrauensintervalle und Einsatzbereiche (Entfernungen). Duch die Verwendung neuronaler Netze bereits in der Sensorsignalverarbeitung wird die Komplexität reduziert und werden die Verzögerungszeiten der Signalverarbeitung verringert.

Ausgestaltungen der Erfindung sind Gegenstand der abhängigen Ansprüche.

Ein Ausführungsbeispiel der Erfindung ist nachstehend unter Bezugnahme auf die zugehörige Zeichnung näher erläutert.

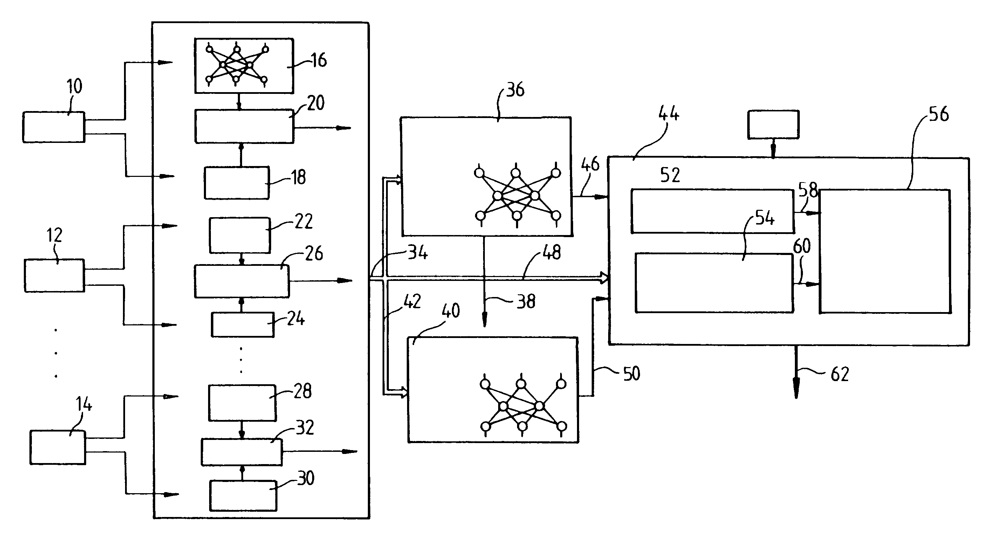

### Kurze Beschreibung der Zeichnung

Die Figur zeigt ein Blockdiagramm einer Signalverarbeitungsanordnung zur Klassifizierung von Objekten aufgrund der Signale einer Mehrzahl verschiedener Sensoren.

### Bevorzugte Ausführung der Erfindung

Mit 10 12 und 14 sind drei Sensoren bezeichnet, die mit Radar, Laserstrahlen und Infrarot arbeiten. Wie angedeutet können noch weitere, von den Sensoren 10,12 und 14 verschiedene Sensoren vorgesehen sein. Die Sensoren 10, 12 und 14 sind bilderfassende Sensoren. Sie liefern in dem jeweiligen Wellenlängenbereich ein Bild des Gesichtsfeldes mit dem zu erkennenden Objekt. Auf diese Weise erfassen die Sensoren insgesamt nicht nur die Konturen des Objekts sondern verschiedene Eigenschaften wie die Temperaturverteilung über die Oberfläche des Objekts, das Reflexionsvermögen für Radarstrahlung und dessen Verteilung oder die Verteilung des Reflexionsvermögens für die Laserstrahlen. Es wird auch die Bewegung des Objekts im Gesichtsfeld erfaßt: Es wird beispielsweise festgestellt, ob sich das Objekt schnell oder langsam oder gar nicht, geradlinig oder auf einer gekrümmten Bahn bewegt. Alle diese Eigenschaften können zur Identifizierung und Klassifizierung des Objekts herangezogen werden.

Zur Sensorsignalverarbeitung sind dem mit Radar arbeitenden Sensor 10 ein neuronales Netzwerk 16 und ein neuronales Netzwerk 18 zugeordnet. Das neuronale Netzwerk 16 verarbeitet Bildinformationen. Das neuronale Netzwerk 18 verarbeitet Spektralinformationen. Um Rotationen, Verschiebungen und Maßstabunterschiede zuzulassen, werden "Multi-Layer"-Netze verwendet, die als "feed-forward"-Netze ausgeführt sind. Innerhalb der Layer können Rückführungen vorgesehen sein. Die Multi-Layer-Netze können "off-line" zur Detektion und Identifikation der potentiellen Ziele trainiert werden. In Verbindung mit algorithmischer Signalverarbeitung liefern diese neuronalen Netzwerke für den betreffenden Sensor 10 spezifische Detektions-, Identifikations- und Bewegungsinformationen. Diese Informationen sind durch Block 20 dargestellt.

In entsprechender Weise sind dem mit Laserstrahl arbeitenden Sensor 12 ein neuronales Netzwerk 22 und ein neuronales Netzwerk 24 zugeordnet. Das neuronale Netzwerk 22 verarbeitet Bildinformationen. Das neuronale Netzwerk 24 verarbeitet Spektralinformationen. Es ergeben sich wieder für den Sensor 12 spezifische Detektions- Identifikations- und Bewegungsinformationen. Diese Informationen sind durch Block 26 dargestellt.

Weiterhin sind dem mit Infrarot arbeitenden Sensor 14 ein neuronales Netzwerk 28 und ein neuronales Netzwerk 30 zugeordnet. Das neuronale Netzwerk 28 verarbeitet Bildinformationen. Das neuronale Netzwerk 30 verarbeitet Spektralinformationen. Es ergeben sich wieder für den Sensor 14 spezifische Detektions- Identifikations- und Bewegungsinformationen. Diese Informationen sind durch Block 32 dargestellt.

Auf der nächsten Ebene erfolgt die Überlagerung der Sensordaten. Diese werden zunächst zu Merkmalsvektoren zusammengestellt. Die Merkmalsvektoren sind in dem Blockdiagramm durch eine Datenleitung 34 symbolisiert. Diese Merkmalsvektoren werden einem neuronalen Netzwerk 36 zur Feststellung der Assoziationen der Bewegungsinformationen und Daten zugeführt.

Die so von dem Netzwerk 36 erhaltene Information wird, wie durch Pfeil 38 dargestellt ist, einem neuronalen Netzwerk 40 zugeführt. Das Netzwerk 40 erhält weiterhin, wie durch Datenleitung 42 angedeutet, die Merkmalsvektoren. Das Netzwerk 40 führt die eigentliche Zielidentifikation und Klassifizierung durch.

Mit 44 ist ein Expertensystem bezeichnet. Das Expertensystem 44 erhält die Ausgangssignale des Netzwerkes 36, des "Assoziations"-Netzwerkes. Das ist durch Pfeil 46 dargestellt. Weiterhin erhält das Expertensystem 44 die Merkmalsvektoren. Das ist durch eine Datenleitung 48 symbolisiert. Schließlich erhält das Expertensystem 44 die Ausgangssignale des Netzwerkes 40, des "Identifikations"-Netzwerkes. Das ist durch die Verbindung 50 dargestellt. Das Expertensystem 44 enthält weiteres Wissen über Daten und Fakten potentieller Objekte (oder Ziele). Dieses Wissen ist durch den Block 52 symbolisiert. Das Expertensystem enthält weiterhin Wissen über den "Weltausschnitt", in dem das Geschehen sich abspielt. Das ist durch Block 54 symbolisiert. Aufgrund dieses Wissens fällt das Expertensystem 44 die endgültige Entscheidung. Das Expertensystem zieht auch Schlußfolgerungen zur Identifikation des Objekts. Das ist durch Block 56 dargestellt, auf welchen die Ausgänge 58 bzw. 60 der Blöcke 52 bzw. 54 aufgeschaltet sind. Das Expertensystem liefert, wie durch Pfeil 62 dargestellt ist, eine auf den Signalen mehrerer Sensoren 10, 12, 14 beruhende Identifizierung des Objekts oder Zieles sowie Vertrauensintervalle, welche ein Maß für die Zuverlässigkeit der Identifizierung darstellen.

## Patentansprüche

1. Signalverarbeitungsanordnung zur Klassifizierung von Objekten aufgrund der Signale einer Mehrzahl verschiedener Sensoren (10,12,14), **dadurch gekennzeichnet, daß**
(a) wenigstens einem Teil der Sensoren zwei neuronalen Netzwerke (16,18; 22,24; 28,30) zugeordnet ist, wobei die neuronalen Netzwerke zur Verarbeitung von unter schiedlichen Charakteristiken des zu klassifizierenden Objekts ausgelegt und trainierbar sind und die Ausgänge der neuronalen Netzwerke einen Merkmalsvektor bilden,
(b) der Merkmalsvektor auf ein drittes neuronales Netzwerk (36) aufgeschaltet ist, das zur Bestimmung von Assoziationen aus dem Merkmalsvektor und zur Erzeugung einer Assoziationsinformation ausgelegt und trainierbar ist,
(c) die Assoziationsinformation auf Identifikations- und Klassifikationsmittel aufgeschaltet ist, durch die eine endgültige Identifikationsinformation erzeugbar ist,
(d) der Merkmalsvektor auch auf die Identifizierungs- und Klassifizierungsmittel aufgeschaltet ist,
(e) die Identifizierungs- und Klassifizierungsmittel ein viertes neuronales Netzwerk (40) enthalten, auf welches die besagte Assoziationsinformation aufgeschaltet ist und welches zur Identifizierung und Klassifizierung des Objekts und zur Erzeugung einer Identifizierungs- und Klassifizierungsinformation eingerichtet und trainierbar ist,
(f) die Identifizierungs- und Klassifizierungsmittel weiterhin Expertensystemmittel (44) enthalten, in denen Wissen über Daten und Fakten bezüglich potentieller Objekte und/oder die Objektumgebung gespeichert ist, und
(g) auf diese Expertensystemmittel (44) die Assoziationsinformation von dem weiteren, dritten neuronalen Netzwerk und die Identifikations- und Klassifikationsinformation von dem vierten neuronalen Netzwerk aufgeschaltet sind, wobei die Expertensystemmittel daraus und aus dem besagten Wissen eine endgültige Identifikationsinformation (62) liefert.

2. Signalverarbeitungsanordnung nach Anspruch 1, **dadurch gekennzeichnet, daß**
(a) jedem aus einer Mehrzahl von Sensoren ein Paar von ersten und zweiten neuronalen Netzwerken zugeordnet ist,
(b) das erste neuronale Netzwerk jedes Paares zur Verarbeitung einer ersten vorgegebenen Charakteristik des zu klassifizierenden Objekts eingerichtet und trainierbar ist und das zweite neuronale Netzwerk jedes Paares zur Verarbeitung einer zweiten vorgegebenen Charakteristik des zu klassifizierenden Objekts eingerichtet und trainierbar ist.

3. Signalverarbeitungsanordnung nach einem der Ansprüche 1 oder 2, **dadurch gekennzeichnet, daß** die Sensoren einen Radarsensor, einen Lasersensor und einen Infrarotsensor umfassen.

4. Signalverarbeitungsanordnung nach einem der Ansprüche 1 bis 3, **dadurch gekennzeichnet, daß** wenigstens ein Teil der Sensoren zur Erzeugung von Bildinformation eingerichtet ist.

5. Signalverarbeitungsanordnung nach Anspruch 4, **dadurch gekennzeichnet, daß** ein erstes neuronales Netzwerk, das einem der besagten Sensoren zugeordnet ist, sensorspezifische Detektions- und Identifikationsinformation liefert, wobei wenigstens eine Komponente des besagten Merkmalsvektors von dieser Detektions- und Identifikationsinformation gebildet ist.

6. Signalverarbeitungsanordnung nach einem der Ansprüche 1 bis 5, **dadurch gekennzeichnet, daß** ein zweites neuronales Netzwerk, das einem der besagten Sensoren zugeordnet ist, eine sensorspezifische Bewegungsinformation liefert, wobei wenigstens eine Komponente des Merkmalsvektors von dieser Bewegungsinformation gebildet ist.

7. Signalverarbeitungsanordnung nach Anspruch 6, **dadurch gekennzeichnet, daß** der die Bewegungsinformation liefernde Sensor ein Radarsensor ist.

8. Signalverarbeitungsanordnung nach einem der Ansprüche 1 bis 7, dadurch **gekennzeichnet, daß** ein zweites neuronales Netzwerk, das einem der besagten Sensoren zugeordnet ist, Spektralinformation liefert, wobei wenigstens eine Komponente des Merkmalsvektors von dieser Spektralinformation gebildet ist.

## Claims

1. A signal processing device for the classification of objects on the basis of the signals from a plurality of different sensors (10,12,14), **characterised in that,**
(a) two neural networks are allocated to at least a part of the sensors (16,18; 22,24; 28,30), the neural networks being designed and trainable for the processing of different characteristics for the classification of objects, and the outputs of the neural networks forming characteristics vector,
(b) the characteristics vector is connected to a third neural networks for the determination of associations from the characteristics vector and is designed and trainable for the generation of an association information,
(c) the association information is connected to identification and classification means which adapted to provide a final identification information,
(d) the characteristics vector is also applied to the identification and classification means,
(e) the identification and classification means comprise a neural network (40) to which the said association information is applied, and is designed and trainable for the identification and classification of the object and for the generation of identification and classification information,
(f) the identification and classification means further comprise expert system means (44), in which knowledge about data and facts with respect to potential objects and/or the object-environment is stord, and
(g) the association information from the further, third, neural network and the identification and classification-information from the forth neural network are connected to this expert system means (44), from which and from the said knowledge, the expert system means supplies a final identification information (62)

2. A signal processing device according to claim 1, **characterised in that,**
(a) a pair of first and second neural networks are allocated to each of a plurality of sensors,
(b) the first neural network of each pair is designed and trainable for the processing of a first given characteristic of the object to be classified, and the second neural network of each pair is designed and trainable for the processing of a second given characteristic of the object to be classified.

3. A signal processing device according to one of the claims 1 or 2, **characterised in that,** the sensors comprise a radar sensor, a laser sensor and an infrared sensor.

4. A signal processing device according to one of the claims 1 to 3, **characterised in that,** at least a part of the sensors are designed for the generation of image-information.

5. A signal processing device according to claims 4, **characterised in that,** a first neural network which is allocated to the said sensors, supply sensor specific detection and identification information, at least one component of the said characteristics vector being this detection and identification-information.

6. A signal processing device according to one of the claims 1 to 5, **characterised in that,** a second neural network, which is allocated to the said sensors, supply sensor-specific movement information, at least one component of the said characteristics vector being this movement information.

7. A signal processing device according to claim 6, **characterised in that,** the sensor supplying movement information is a radar sensor.

8. A signal processing device according to one of the claims 1 to 7, **characterised in that,** a second neural network which is allocated to the said sensors, supply spectral-information, at least one component of the said characteristics vector being this spectral-information.

## Revendications

1. Disposition de traitement de signaux destinée à classer des objets d'après les signaux de plusieurs capteurs différents (10,12,14), **caractérisée par le fait que**
(a) deux réseaux neuronaux (16,18 ; 22,24 ; 28,30) sont associés à au moins une partie des capteurs, les réseaux neuronaux étant étudiés pour le traitement de diverses caractéristiques de l'objet devant être classé et étant susceptibles d'être exercés à cela et les sorties des réseaux neuronaux formant un vecteur distinctif,
(b) le vecteur distinctif est appliqué à un troisième réseau neuronal (36) qui est étudié pour la détermination d'associations à partir du vecteur distinctif et pour la génération d'une information sur l'association et qui est susceptible d'être exercé à cela,
(c) l'information sur l'association est appliquée à des moyens d'identification et de classification par lesquels une information définitive sur l'identification est susceptible d'être générée,
(d) le vecteur distinctif est également appliqué aux moyens d'identification et de classification,
(e) les moyens d'identification et de classification comprennent un quatrième réseau neuronal (40) auquel est appliquée ladite information sur l'association et qui est installé pour l'identification et la classification de l'objet et pour la génération d'une information sur l'identification et la classification et qui est susceptible d'être exercé à cela,
(f) les moyens d'identification et de classification contiennent en outre des moyens de système expert (44) dans lesquels des connaissances sur des données et des faits en ce qui concerne des objets potentiels et/ou sur l'environnement de l'objet sont mémorisées, et
(g) l'information sur l'association est appliquée à ces moyens de système expert (44) par l'autre troisième réseau neuronal et l'information sur l'identification et la classification est appliquée à ceux-ci par le quatrième réseau neuronal, les moyens de système expert livrant à partir de cela et à partir desdites connaissances une information définitive sur l'identification (62).

2. Disposition de traitement de signaux selon la revendication 1, **caractérisée par le fait que**
(a) une paire de premiers et de deuxièmes réseaux neuronaux est associée à chacun des plusieurs capteurs,
(b) le premier réseau neuronal de chaque paire est installé pour le traitement d'une première caractéristique prédonnée de l'objet devant être classé et est susceptible d'être exercé à cela et le deuxième réseau neuronal de chaque paire est installé pour le traitement d'une deuxième caractéristique prédonnée de l'objet devant être classé et est susceptible d'être exercé à cela.

3. Disposition de traitement de signaux selon l'une des revendications 1 ou 2, **caractérisée par le fait que** les capteurs comprennent un capteur radar, un capteur laser et un capteur infrarouge.

4. Disposition de traitement de signaux selon l'une des revendications 1 à 3, **caractérisée par le fait qu**'au moins une partie des capteurs est installée pour la génération de l'information sur des images.

5. Disposition de traitement de signaux selon la revendication 4, **caractérisée par le fait qu**'un premier réseau neuronal associé à l'un desdits capteurs livre une information sur la détection et l'identification spécifique au capteur, au moins une composante dudit vecteur distinctif étant formée par cette information sur la détection et l'identification.

6. Disposition de traitement de signaux selon l'une des revendications 1 à 5, **caractérisée par le fait qu**'un deuxième réseau neuronal associé à l'un desdits capteurs livre une information sur le déplacement spécifique au capteur, au moins une composante du vecteur distinctif étant formée par cette information sur le déplacement.

7. Disposition de traitement de signaux selon la revendication 6, **caractérisée par le fait que** le capteur livrant l'information sur le déplacement est un capteur radar.

8. Disposition de traitement de signaux selon l'une des revendications 1 à 7, **caractérisée par le fait qu**'un deuxième réseau neuronal associé à l'un desdits capteurs livre une information spectrale, au moins une composante du vecteur distinctif étant formée par cette information spectrale.
